# DEMANDE DE BREVET EUROPEEN

(11) **EP 1 886 855 A2**
(43) Date de publication de la demande: **13.02.2008**
(21) Numéro de dépôt: 07112194.1
(22) Date de dépôt: 10.07.2007
(51) Int. Cl.: B60J 1/20, B60J 3/02

(54) **Store à enrouleur à support de cassette, procédé d'assemblage et véhicule automobile correspondants**

(30) Priorité: 10.07.2006 FR 0606264
(71) Demandeur: WAGON SAS, 79302 Bressuire Cédex (FR)
(72) Inventeur: Jincheleau, Michel, 79320 Moncoutant (FR)
(74) Mandataire: Bioret, Ludovic

(57) **Abrégé**

L'invention concerne un store d'occultation d'une baie (21) d'une portière (2) d'un véhicule automobile, comprenant une cassette (20) dans laquelle est logé un tube enrouleur (12) auquel est solidarisé un rideau rétractable (11) pouvant passer d'une position repliée à au moins une position d'obturation en se déplaçant à travers une fente (202) pratiquée dans une partie supérieure d'un panneau intérieur (40) de ladite portière (2),

Selon l'invention, d'un tel store comprend au moins un élément de support (30) portant ladite cassette (20), ledit élément de support (30) présentant au moins trois parties :
- une première partie formant un réceptacle destiné à recevoir ladite cassette (20) ;
- une deuxième partie (304) s'étendant vers l'intérieur dudit véhicule et formant premier moyen de solidarisation audit panneau intérieur (40) ; et
- une troisième partie (305) s'étendant vers l'extérieur dudit véhicule et formant deuxième moyen de solidarisation audit panneau intérieur (40).

## Description

### 1. Domaine de l'invention

Le domaine de l'invention est celui des stores d'occultation pour portière de véhicule. Plus précisément, l'invention concerne les stores rétractables à enrouleur, que l'utilisateur peut déployer, par exemple pour se protéger du soleil.

### 2. Art antérieur

Classiquement, les portières de véhicule présentent un panneau de porte, sur lequel est montée une vitre, par exemple fixe ou coulissante. Le panneau de porte comprend généralement un caisson inférieur tôlé sur sa face extérieure correspondant à la carrosserie du véhicule, et une garniture de porte sur sa face intérieure (appelée également par la suite, par simplification, panneau intérieur).

L'intérieur du caisson peut comprendre différents éléments, généralement en tôle, de renfort et d'accrochage des différents éléments. Il comprend également, en cas de besoin, le système, mécanique ou électrique, de commande du coulissement de la vitre.

On notera ici que le terme « portière » englobe les deux ou quatre portières d'un véhicule, mais peut également être généralisé, par extension, à des parties de carrosserie fixes portant une vitre (cas des vitres arrière d'un véhicule à deux portes ou d'un véhicule utilitaire, ou de la vitre arrière d'un véhicule) et les autres parties mobiles, tels que les hayons ou les toits ouvrants. On utilise par la suite le terme « portière » pour des raisons de simplicité, mais il est clair que l'invention s'applique à tout type d'ouverture ménagée dans un véhicule.

On connaît depuis longtemps des stores rétractables permettant l'occultation partielle ou pratiquement totale de la baie de telles portières. Souvent, le store est monté sur un tube d'enroulement, logé à l'intérieur d'un boîtier que l'on vient fixer, d'une manière quelconque, sur la partie supérieure de la garniture intérieure de la portière.

Cette technique présente notamment l'inconvénient d'être relativement inesthétique en ce sens que le boîtier reste visible depuis l'intérieur ou l'extérieur du véhicule. Il occulte en outre souvent une partie inférieure de la baie.

On connaît également des stores dont le boîtier est installé à l'intérieur de la portière, sous le panneau intérieur. Selon cette technique, une ouverture spécifique (fente) est prévue sur la partie supérieure du panneau de porte, pour permettre le passage du rideau. De tels stores peuvent être montés de manière optionnelle après la fabrication du véhicule.

Cette technique est préférable sur le plan esthétique. En revanche elle pose certains problèmes.

Un premier inconvénient de cette technique de l'art antérieur est que la fente réalisée dans le panneau intérieur fragilise considérablement l'habillage.

Un autre inconvénient de cette technique de l'art antérieur est que la fente engendre un manque de rigidité du panneau intérieur qui peut notamment se déformer lors d'un appuis du coude d'un usager du véhicule. Cette déformation peut parfois être répercutée jusqu'au dispositif d'occultation et entraîner une dégradation du boîtier et de son contenu.

Un autre inconvénient est que la fente peut présenter une forme irrégulière qui peut générer l'émission de bruit lors du déploiement et/ou du repli du store dû au frottement de la toile d'occultation. Ces frottements peuvent également être à l'origine de dégradation du store.

Encore un inconvénient est que les déformations engendrées au niveau du panneau intérieur sont à l'origine de jeu observé au niveau de l'enjoliveur destiné à recouvrir en partie la fente pouvant provoquer son déboîtement de la partie supérieure de panneau intérieur.

On a envisagé d'utiliser des cassettes en alliage d'aluminium ayant un profil spécifique permettant d'augmenter la rigidité de panneau intérieur. Ces solutions sont efficaces, mais cependant complexes, chères et peu aisées à monter notamment du fait qu'elles sont non seulement spécifiques à chaque véhicule, mais aussi à chacune de ses déclinaisons (berline, break, coupé...).

### 3. Objectifs de l'invention

L'invention a notamment pour objectif de pallier ces inconvénients de l'art antérieur.

Plus précisément, un objectif de l'invention, dans au moins un mode de réalisation, est de fournir une technique qui permette d'obtenir une bonne rigidité du panneau intérieur tout en restant relativement simple à produire et à monter.

L'invention a également pour objectif, dans au moins un mode de réalisation, de fournir une telle technique qui permette d'adapter aisément un store à plusieurs déclinaisons d'un véhicule et/ou à plusieurs véhicules.

Un autre objectif de l'invention, dans au moins un mode de réalisation, est de mettre en oeuvre un store qui soit simple à installer et dont la maintenance et notamment le remplacement soient faciles.

L'invention a encore pour objectif, dans au moins un mode de réalisation, de proposer un tel store utilisant des éléments constitutifs classiques, comme les paliers.

Un objectif de l'invention, dans au moins un mode de réalisation, est de fournir un tel store qui soit facile à fabriquer et peu coûteux.

L'invention a aussi pour objectif, dans au moins un mode de réalisation, la fourniture d'un tel store qui présente de bonnes qualités esthétiques et ergonomiques notamment en regard de l'habillage intérieur de la portière.

### 4. Exposé de l'invention

Ces objectifs, ainsi que d'autres qui apparaîtront par la suite, sont atteints à l'aide d'un store d'occultation d'une baie d'une portière d'un véhicule automobile, comprenant une cassette dans laquelle est logé un tube enrouleur auquel est solidarisé un rideau rétractable pouvant passer d'une position repliée à au moins une position d'obturation en se déplaçant à travers une fente pratiquée dans une partie supérieure d'un panneau intérieur de ladite portière.

Selon l'invention, un tel store comprend au moins un élément de support portant ladite cassette, ledit élément de support présentant au moins trois parties :
- une première partie formant un réceptacle destiné à recevoir ladite cassette (20) ;
- une deuxième partie (304) s'étendant vers l'intérieur dudit véhicule et formant premier moyen de solidarisation audit panneau intérieur (40) ; et
- une troisième partie (305) s'étendant vers l'extérieur dudit véhicule et formant deuxième moyen de solidarisation audit panneau intérieur (40).

La technique selon l'invention, bien qu'ajoutant une pièce, est simple et efficace et va à l'encontre de la démarche habituelle de l'homme du métier qui, pour simplifier un système, tant naturellement à en réduire le nombre de pièces.

Il est ainsi aisé de solidariser la cassette au support de façon à obtenir un bloc prêt à être facilement solidarisé au panneau intérieur d'une portière de véhicule automobile.

En outre, la mise en oeuvre des deuxième et troisième parties formant moyens de solidarisation au panneau intérieur et qui s'étendent respectivement vers l'intérieur et vers l'extérieur du véhicule, permet non seulement d'accroître la rigidité du panneau intérieur dans la région de la fente mais également d'augmenter sa rigidité en partie supérieure au-delà de la région de la fente.

Par ailleurs, outre les aspects relatifs au renfort de la rigidité du panneau intérieur que la mise en oeuvre de l'invention permet d'obtenir, celle-ci permet également d'abaisser de façon significative le coût d'un store. Ceci tient à l'architecture particulière du store qui selon l'invention comprend une cassette et un élément de support formant un réceptacle à l'intérieur duquel celle-ci peut être logée.

Cette architecture originale consiste à produire séparément les cassettes et les supports de cassette nécessaires à leur solidarisation au panneau intérieur.

Ces cassettes, de forme relativement simple, peuvent être obtenues à partir de barres extrudées constituant de véritables « standards », qui sont mises à longueur par exemple par tronçonnage de façon à répondre aux contraintes dimensionnelles de différentes déclinaisons d'un ou de plusieurs véhicules. On comprend alors que toutes les cassettes de stores destinées à équiper différentes déclinaisons ou différents véhicules peuvent être produites à un coût relativement bas du fait qu'elles sont issus de barres standards ne nécessitant aucune autres opération d'usinage qu'une mise à longueur.

La technique selon l'invention permet donc de produire des stores à un coût assez réduit, seuls les supports étant spécifiques à chaque déclinaison ou véhicules.

De façon préférentielle, ledit support comprend au moins une zone destinée à coopérer avec un palier dudit tube enrouleur.

Le support selon l'invention permet alors de solidariser facilement et efficacement des paliers, qui avantageusement sont des paliers standard couramment mis en oeuvre par l'homme du métier.

De façon avantageuse, ladite cassette comprend des premiers moyens de solidarisation d'un élément extérieur visible prévu pour venir en lieu et place de ladite fente.

La cassette permet ainsi la fixation d'un enjoliveur et son maintien de façon rectiligne, et d'améliorer les caractéristiques esthétiques du store.

Selon un aspect particulier de l'invention, ladite cassette comprend des seconds moyens de solidarisation audit panneau intérieur.

La cassette permet ainsi de renforcer la rigidité du panneau intérieur notamment dans la région de la fente permettant le passage de la toile d'occultation. Elle permet en outre de conserver une bonne linéarité de la fente.

Préférentiellement, ladite cassette est réalisée dans un alliage d'aluminium.

La mise en oeuvre d'un tel matériau confère à la cassette une bonne rigidité et permet de bloquer les dilatations à basses et hautes températures. Selon l'invention, la cassette est préférentiellement obtenue sous forme de barres qui peuvent être mises à longueur de façon à réaliser des stores adaptés à différentes déclinaisons d'un même véhicule ou encore adaptés à différents modèles de véhicules.

Selon un aspect préféré de l'invention, ledit support est réalisé dans un matériau plastique.

Le support peut ainsi être facilement obtenu, par exemple par injection. Selon l'invention, le support est préférentiellement spécifique à chaque déclinaison d'un véhicule.

De façon avantageuse, ledit élément de support présente des éléments de fixation de ladite cassette.

L'invention concerne également un procédé d'assemblage d'un store dans une portion supérieure d'un caisson intérieur, et un véhicule automobile équipé d'un tel store.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est une représentation vue de l'intérieur d'un véhicule d'un store selon l'invention en position déployée ;
- la figure 2 illustre un exemple de cassette selon l'invention ;
- la figure 3 illustre un exemple de support de cassette destiné à coopérer avec la cassette de la figure 2 ;
- la figure 4 illustre une vue en coupe de la partie supérieure d'un caisson intérieur auquel est solidarisé un store selon l'invention ;
- la figure 5 illustre la façon dont sont agencées les différentes pièces constitutives d'un store selon l'invention ;
- la figure 6 est une représentation vue de l'intérieur du véhicule d'un store selon l'invention solidarisé à la portière d'un véhicule ;
- la figure 7 est un synoptique d'un procédé d'assemblage d'une store selon l'invention.

### 6. Description d'un mode de réalisation de l'invention

### 6.1 Le principe

Comme déjà mentionné, le principe général de l'invention repose sur la mise en oeuvre d'un support maintenant la cassette d'un store et solidarisé par exemple au panneau intérieur d'une portière de véhicule automobile de façon à en renforcer la rigidité.

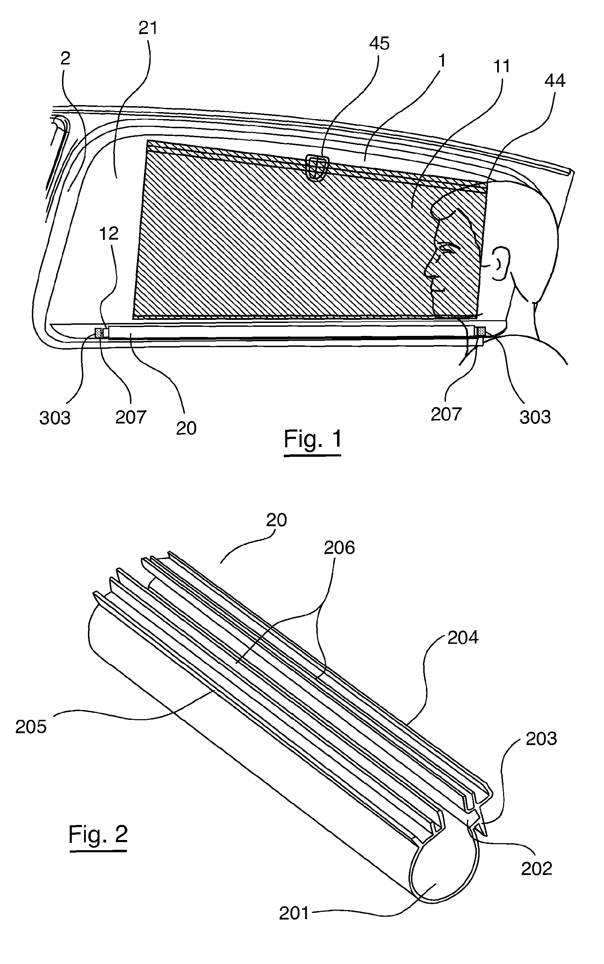

La figure 1 illustre une représentation, vue de l'intérieur d'un véhicule, d'un store selon l'invention. Tel qu'illustré, un store 1 est dans une position déployée dans laquelle une toile d'occultation 11 est maintenue en regard d'une vitre latérale 21 d'une portière 2 de véhicule. Le store 1 est un store à enrouleur connu en soi de l'homme du métier, dont l'extrémité inférieure de la toile 11 est solidaire d'un tube enrouleur 12 logé à l'intérieur d'une cassette 20. La cassette 20 est dissimulée à l'intérieur de la portière 2 et fixée au panneau intérieur (non représenté sur cette figure).

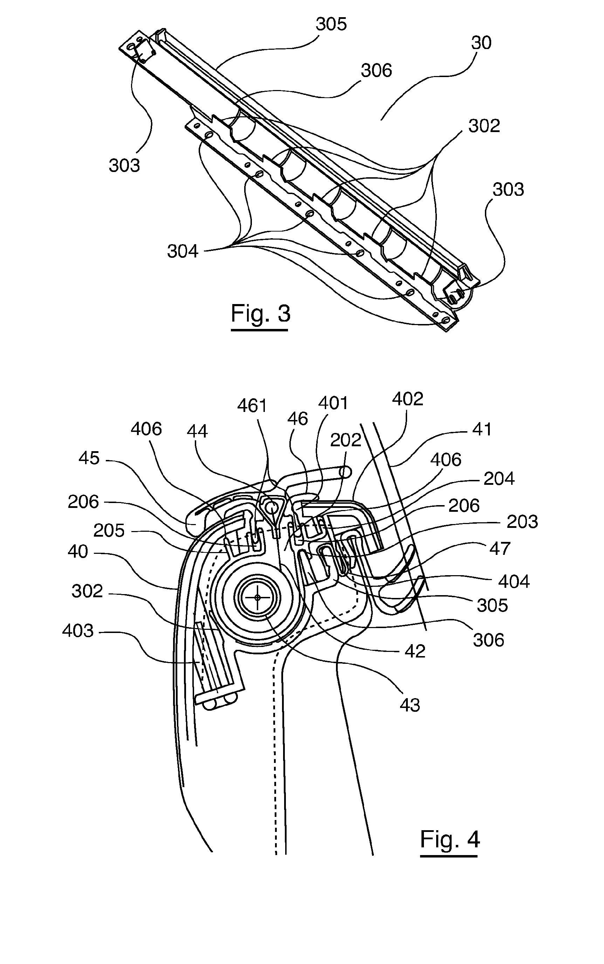

Le store selon l'invention met notamment en oeuvre une cassette dans laquelle est logé le tube enrouleur, laquelle est solidarisée à un support. On présente en relation avec les figures 2 et 3 les formes complémentaires de cette cassette et de ce support.

### 6.2 La cassette

La figure 2 illustre un exemple de cassette selon l'invention. La cassette 20 présente une forme allongée sensiblement cylindrique. Sa partie centrale 201 est creuse et est notamment destinée à intégrer la toile d'occultation 11 enroulée sur le tube enrouleur 12. Les deux extrémités supérieures de la cassette 20 s'ouvrent sur une fente 202 qui s'étend sur toute la longueur de la cassette et qui constitue un passage pour la toile d'occultation 11 lors de son déploiement et de son repli.

Les deux extrémités supérieures de la cassette formant la fente 202 présentent un profil particulier. Une première extrémité présente dans sa région inférieure une cavité inférieur 203 qui s'étend sur toute la longueur de la cassette 20. Chacune des extrémités supérieures de la cassette 20 présente une patte de fixation 204 et 205 ainsi qu'une cavité supérieure 206. Les pattes de fixation 204, 205 et la cavité supérieure 206 s'étendent chacune sur toute la longueur de la cassette 20.

La cassette 20 est préférentiellement réalisée dans un matériau métallique rigide, tel qu'un alliage d'aluminium. Le recours à un tel matériau confère à la cassette une bonne rigidité et permet le blocage des dilatations tant en températures hautes qu'en températures basses.

La forme particulière de la cassette 20 lui confère plusieurs avantages. On note ainsi que la cassette 20 est relativement aisée à fabriquer et peu coûteuse. La cassette 20 peut ainsi être obtenue sous forme de barres extrudées.

On comprend alors que l'obtention de la cassette 20 sous forme de barre permet de réaliser des cassettes de différentes longueurs, par exemple par tronçonnage, qui pourront être mise en oeuvre pour la réalisation de stores adaptés aux différentes déclinaisons d'un même véhicule ou encore adaptés à différents modèles de véhicules.

On comprend également que les cassettes mises à longueur ne doivent pas, préférentiellement, subir la moindre opération d'usinage ultérieure. La cassette 20 obtenue sous la forme de barres extrudées constitue donc un « standard » permettant la fabrication de différents stores et d'en réduire le coût de fabrication de façon significative.

### 6.3 Le support

La figure 3 illustre une représentation d'un support de cassette de store selon l'invention.

Le support 30 présente une forme définissant sensiblement un demi-cylindre. Ce demi-cylindre est conçu de telle sorte que la cassette 20 puisse y être logée. Il forme ainsi un réceptacle dans lequel la cassette peut être insérée et constitue donc le boîtier du store. Le support 30 présente une succession de lamelles déformables 302 s'étendant sensiblement verticalement et disposées régulièrement au moins sur une portion de sa longueur.

Ces lamelles 302 constituent un moyen de solidarisation par clippage permettant de coincer et de maintenir la cassette 20 dans le support 30 de façon à ne former qu'un seul bloc. Chacune des extrémités du support 30 présente une oreille 303 sur laquelle un palier (non représenté) du tube enrouleur du store est fixé, par exemple par clippage. Les paliers mis en oeuvre sont préférentiellement des paliers standard classiquement utilisés par l'homme du métier. À l'une de ses extrémités inférieures, le support présente plusieurs perçages 304 qui, comme il sera expliqué par la suite, sont destinés à solidariser le support 30 au panneau intérieur 40. À l'une de ses extrémités supérieures, le support 30 présente une languette 305 et un renflement 306 dont la vocation sera explicitée plus en détail par la suite.

Le support 30 est réalisé par exemple dans un matériau plastique, tel que le polypropylène, avantageusement chargé de façon à en augmenter les caractéristiques mécaniques. Tout autre matériau adéquat pourra bien sûr être utilisé.

Le support 30 peut être obtenu facilement par injection. D'autres procédés d'obtention de pièces réalisées en matière plastique peuvent être envisagés.

Le support 30 permet la fixation du store au véhicule. Il constitue une pièce qui, contrairement à la cassette 20 pouvant être qualifiée de « standard » (en ce qui concerne sa section, à tout le moins), est spécifique à chaque déclinaison d'un véhicule.

Le principe de fixation du store selon l'invention au panneau intérieur 40 va maintenant faire l'objet d'explications.

### 6.4 L'assemblage du store

La figure 4 illustre une représentation en coupe d'un mode de réalisation avantageux d'un tel store, monté dans une portière de véhicule automobile.

Le panneau intérieur 40 de cette portière s'étend sensiblement jusqu'au voisinage de la vitre 41. Une fente 401 a été découpée sur la face supérieure 402 du panneau intérieur 40 de façon à permettre le passage de la toile d'occultation 42 du store.

En position repliée, la toile 42 du store est classiquement enroulée autour d'un tube d'enroulement 43, et la barre de tirage 44 munie d'un élément de préhension 45 vient en appui contre un enjoliveur 46 placé sur la fente 401, notamment pour des raisons esthétiques, mais également de guidage et de limitation de l'usure de la toile.

La cassette 20 est solidarisée au support 30. Dans un mode de réalisation préférentiel de l'invention, la cassette 20 est solidarisée au support 30 par clippage au moyen des lamelles déformables 302 formant ressort. D'autres modes de solidarisation peuvent bien sûr être envisagés.

La cassette 20 est solidarisée au support 30 de façon que le renflement 306 du support 30 pénètre la cavité inférieure 203 de la cassette 20. Ainsi solidarisée au support 30, la cassette 20 y est bloquée en rotation, et le support 30 et la cassette 20 ne forment qu'un seul bloc prêt à être solidarisé au véhicule.

Le support 30 est fixé par deux de ses extrémités au panneau intérieur 40. Une première extrémité est fixée au panneau intérieur 40 par boutrolage. À cet effet, les perçages 304 du support coopèrent avec des premières extensions 403 qui s'étendent vers le bas et qui sont formées sur la face tournée vers l'intérieur de la portière. Ces perçages 304 constituent des moyens de solidarisation de l'élément de support au panneau intérieur.

Une agrafe 47 permet de fixer une seconde extrémité du support 30 au panneau intérieur 40. Pour cela, l'agrafe 47 est enclippsée sur la languette 305 du support 30 et coopère avec des secondes extensions 404 qui s'étendent vers le bas et qui sont formées sur la face tournée vers l'extérieure de la portière. La languette 305 constitue de ce fait un moyen de solidarisation du support au panneau intérieur.

Bien entendu, les modes de fixation des premières et secondes extrémités du support 30 peuvent être inversés. On peut également envisager que les premières et secondes extrémités du support 30 soient solidarisées par boutrolage ou par agrafage. On peut encore envisager que d'autres modes de fixation soient utilisés. En particulier, le support 30 pourra être solidarisé au panneau intérieur 40 par vissage.

Le support 30 permet donc un assemblage simple et peu coûteux du bloc qu'il forme avec la cassette au panneau intérieur.

Les pattes de fixation 204 et 205 que présente la cassette 20 dans sa partie supérieure coopèrent avec deux rainures 406 formées sur la face tournée vers l'intérieur de la portière.

Un enjoliveur 46 visible depuis l'intérieur du véhicule permet de recouvrir en partie la fente 401. Cet enjoliveur 46 est réalisé par exemple en matériau plastique et de façon à s'accorder avec l'aspect du panneau intérieur 40.

L'enjoliveur 46 présente dans sa partie inférieure deux protubérances 461 s'étendant sensiblement sur toute sa longueur et orientées vers le bas. Les protubérances 461 sont destinées à coopérer avec les cavités 206 situées sur chacune des extrémités supérieures de la cassette 20. De façon à améliorer le maintien de l'enjoliveur 46 sur la cassette 20, la surface des protubérances 461 présente des sillons formant saillie. Ainsi solidarisé à la cassette 20, l'enjoliveur est maintenu de façon rectiligne.

Ainsi qu'il a été précisé à plusieurs reprises, la configuration du store qui selon l'invention met en oeuvre une cassette 20 et un support de cassette 30 permet d'augmenter de façon non négligeable la rigidité du panneau intérieur 40 notamment dans sa région supérieure, en particulier au niveau de la fente 401 qui y est ménagée.

En effet, comme déjà décrit, la cassette 20 est réalisée dans un matériau métallique rigide, avantageusement un alliage d'aluminium, et est dotée dans sa partie supérieure de pattes de fixation 204 et 205 qui coopèrent avec les rainures406 formées dans la région de la fente 401 du panneau intérieur 40 ce qui participe au renfort de la fente, à son maintien de façon rectiligne, et à la rigidification de la région supérieure du panneau intérieur 40.

Par ailleurs, la cassette 20 est solidarisée au support 30, lui-même solidarisé à chacune de ses extrémités au panneau intérieur 40. La présence du support 30 à pour effet non seulement de participer à la rigidification de la zone se trouvant autour de la fente 401, mais de l'augmenter de façon considérable. Il permet en outre un assemblage simple du store.

La mise en oeuvre combinée de la cassette 20 et du support 30 permet de renforcer la rigidité du panneau supérieur et donc d'éviter sa déformation notamment lorsqu'un passager du véhicule appuie son coude sur le panneau de la portière. Ceci a notamment pour effet d'éviter la dégradation des éléments constitutifs du store, comme le tube enrouleur. Ceci permet également de conserver une fente régulière et ainsi d'éviter que des bruits soient émis lors de déploiement ou du repli de la toile d'occultation, et que l'enjoliveur se déboîte.

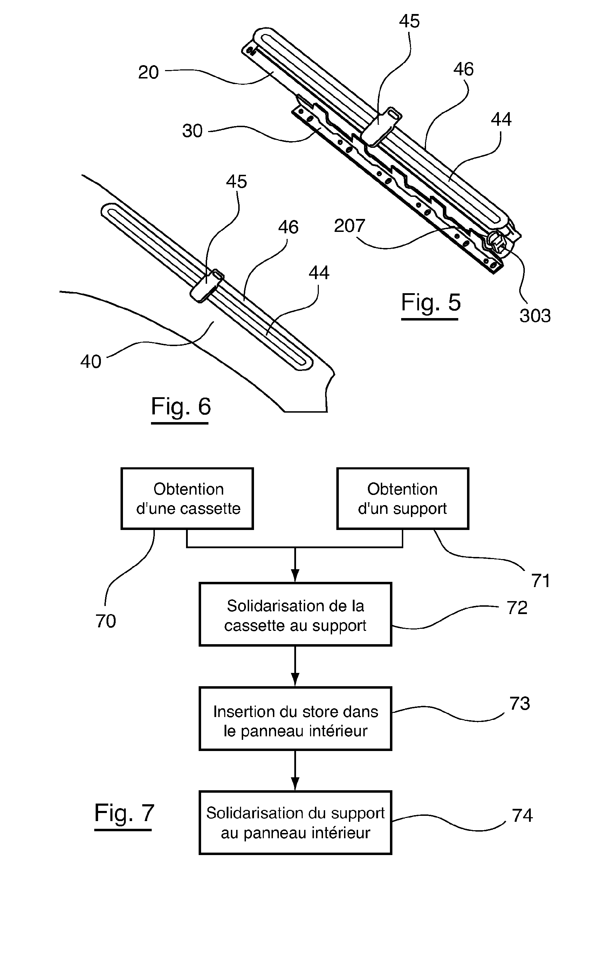

La figure 5 est une vue en perspective d'un store selon l'invention. Cette figure laisse apparaître plus clairement la façon dont les pièces constitutives du store, et plus particulièrement la casette 20 et le support 30 s'imbriquent.

Comme il apparaît sur cette figure, les « oreilles » 303 du support 30 coopèrent avec les paliers 207 (un seul de ces paliers est visible sur la figure) de la cassette 20. Ces paliers peuvent ainsi être des paliers classiques (standard), solidarisés au support, par exemple par clippage.

La figure 6 illustre une représentation vue depuis l'intérieur d'un véhicule d'un store selon l'invention solidarisé à la portière d'un véhicule. Elle permet de mieux visualiser la partie visible par les usagers d'un véhicule d'un store selon l'invention.

### 6.5 Avantages conférés par un store selon l'invention

La structure d'un store selon l'invention qui se compose donc notamment d'une cassette solidarisée sur un support de façon à former un bloc prêt à être solidarisé au panneau intérieur d'une portière de véhicule, confère notamment les avantages suivants :
- augmentation de la rigidité du panneau intérieur ;
- conservation de la linéarité de la fente présente dans le panneau intérieur permettant le passage de la toile d'occultation ;
- maintien rectiligne de l'enjoliveur ;
- blocage des dilatations à hautes et basses températures ;
- assurance d'une protection des éléments constitutifs du store, notamment du tube enrouleur (par exemple lors d'un appui du coude).

La mise en oeuvre d'un support selon l'invention présente notamment les avantages suivants :
- assemblage simple ;
- coincement de la cassette de façon à ne former qu'un seul bloc ;
- réception de palier clippé standard.

L'assemblage d'un store selon l'invention permet en outre de réduire l'usinage.

### 6.6 Le procédé d'assemblage du store

On présente en relation avec la figure 7 un procédé d'assemblage d'un store selon l'invention à la partie supérieure d'un panneau intérieur d'une portière de véhicule automobile.

Le procédé selon l'invention comprend au moins cinq étapes. Une première étape 70 consiste en l'obtention d'une cassette 20 selon l'invention. Cette cassette 20 peut être obtenue sous forme de barres extrudées en alliage d'aluminium qui sont tronçonnées de façon à présenter des longueurs adaptées à différentes déclinaisons d'un véhicule dans lequel elle sont destinées à être intégrées (berline, break, coupé...) ou bien à différents véhicules.

Une deuxième étape 71 consiste à obtenir un support 30 de cassette 20 selon l'invention. Il peut, par exemple, s'agir d'une étape d'injection plastique de supports spécifiques aux caractéristiques dimensionnelles d'un panneau intérieur d'une déclinaison d'un véhicule.

Une troisième étape 72 consiste à solidariser la cassette 20 au support 30. Cette solidarisation peut par exemple se faire par clippage. Cette étape comprend en outre la fixation des paliers du tube enrouleur du store à des oreilles de fixation prévues à cet effet de part et d'autre du support. Elle permet donc l'obtention d'un store prêt à être solidarisé au véhicule.

Une quatrième étape 73 consiste à introduire le store selon l'invention dans le panneau intérieur.

Une dernière étape 74 consiste à solidariser le bloc notamment formé par le support et la cassette au panneau intérieur d'une portière de véhicule. Cette solidarisation peut se faire de façon simple et efficace par boutrolage et/ou agrafage, et/ou vissage.

## Revendications

1. Store d'occultation d'une baie (21) d'une portière (2) d'un véhicule automobile, comprenant une cassette (20) dans laquelle est logé un tube enrouleur (12) auquel est solidarisé un rideau rétractable (11) pouvant passer d'une position repliée à au moins une position d'obturation en se déplaçant à travers une fente (202) pratiquée dans une partie supérieure d'un panneau intérieur (40) de ladite portière (2),
**caractérisé en ce qu'**il comprend au moins un élément de support (30) portant ladite cassette (20), ledit élément de support (30) présentant au moins trois parties :
- une première partie formant un réceptacle destiné à recevoir ladite cassette (20) ;
- une deuxième partie (304) s'étendant vers l'intérieur dudit véhicule et formant premier moyen de solidarisation audit panneau intérieur (40) ; et
- une troisième partie (305) s'étendant vers l'extérieur dudit véhicule et formant deuxième moyen de solidarisation audit panneau intérieur (40).

2. Store selon la revendication 1, **caractérisé en ce** ledit élément de support (30) comprend au moins une zone (303) destinée à coopérer avec un palier dudit tube enrouleur (12).

3. Store selon l'une quelconque des revendications 1 à 2, **caractérisé en ce que** ladite cassette (20) comprend des premiers moyens de solidarisation (206) d'un élément extérieur visible (46) prévu pour venir en lieu et place de ladite fente (202).

4. Store selon l'une quelconque des revendications 1 à 3, **caractérisé en ce que** ladite cassette (20) comprend des seconds moyens de solidarisation (204, 205) audit panneau intérieur (40).

5. Store selon l'une quelconque des revendications 1 à 4, **caractérisé en ce que** ladite cassette (20) est réalisée dans un alliage d'aluminium.

6. Store selon l'une quelconque des revendication 1 à 5, **caractérisé en ce que** ledit élément de support (30) est réalisé dans un matériau plastique.

7. Store selon l'une quelconque des revendications 1 à 6, **caractérisé en ce que** ledit élément de support (30) présente des éléments de fixation (302, 306) de ladite cassette (20).

8. Procédé d'assemblage d'un store dans une portion supérieure d'un caisson intérieur, **caractérisé en ce qu'**il comprend :
- une étape d'obtention de ladite cassette (20) ;
- une étape d'obtention dudit élément de support (30) ;
- une étape de solidarisation dudit élément support (30) à ladite cassette (20), pour former ledit store ;
- une étape d'insertion dudit store dans ledit panneau intérieur (40) ;
- une étape de solidarisation de chaque extrémité dudit élément de support (30) audit panneau intérieur (40).

9. Procédé d'assemblage selon la revendication 8, **caractérisé en ce que** la solidarisation de ladite cassette (20) audit élément de support (30) se fait par clippage.

10. Procédé d'assemblage selon l'une des revendications 8 et 9, **caractérisé en ce que** ledit élément de support (30) est fixé audit caisson selon au moins une des techniques appartenant au groupe comprenant le boutrolage, l'agrafage, le clippage et le vissage.

11. Véhicule automobile, **caractérisé en ce qu'**il comprend au moins un store selon l'une quelconque des revendications 1 à 7.
